# EUROPEAN PATENT APPLICATION

(11) **EP 4 834 848 A1**
(43) Date of publication of application: **04.11.2026**
(21) Application number: 24910374.8
(22) Date of filing: 13.11.2024
(51) Int. Cl.: C01G 53/00, H01M 4/36, H01M 4/525, H01M 10/0525

(54) **POSITIVE ELECTRODE MATERIAL PRECURSOR AS WELL AS PREPARATION METHOD THEREFOR AND USE THEREOF**

(30) Priority: 29.12.2023 CN 202311871460
(71) Applicant: HUAYOU NEW ENERGY TECHNOLOGY (QUZHOU) CO., LTD., Quzhou, Zhejiang 324000 (CN); ZHEJIANG HUAYOU COBALT CO., LTD., Jiaxing, Zhejiang 314000 (CN)
(72) Inventor: ZHOU, Wenjie, Quzhou, Zhejiang 324000 (CN); OUYANG, Yi, Quzhou, Zhejiang 324000 (CN); CAI, Zengfu, Quzhou, Zhejiang 324000 (CN); WU, Guojun, Quzhou, Zhejiang 324000 (CN)
(74) Representative: MERH-IP Matias Erny Reichl Hoffmann Patentanwälte PartG mbB
(86) International application number: PCT/CN2024/131854
(87) International publication number: WO 2025/139438

(57) **Abstract**

A cathode material precursor, a preparation method therefor, and use thereof are disclosed, which relate to the technical field of cathode materials for lithium-ion batteries. The cathode material precursor of the present application includes precursor particles, which are formed by agglomeration of multiple first particles. The first particles are core-shell structures, and the core-shell structure has an inner core and a surface layer; the inner core has dense crystal seeds; the surface layer has multiple whiskers, and there are pores between adjacent whiskers. Thus, a highly agglomerated, porous, and large-particle precursor with puff-like loose surface morphology is formed, which is conducive to industrial production.

## Description

The present application claims priority to the Chinese patent application filed with the China Patent Office on December 29, 2023, with application number 202311871460.7 and invention name "Cathode material precursor, preparation method therefor, and use thereof", the entire contents of which are incorporated by reference into this application.

### TECHNICAL FIELD

The present application relates to the technical field of battery materials, in particularly to a cathode material precursor, a preparation method therefor, and use thereof.

### BACKGROUND

With the increase in sales of new energy vehicles and the steady growth of markets such as power tools, the application of ternary cathode materials has maintained rapid growth. The performance of ternary cathode materials (such as lithium nickel cobalt manganese oxide) depends largely on the performance of ternary precursors (such as nickel cobalt manganese hydroxide). At present, one of the main development trends of ternary cathode materials is single crystalization. The use of single crystal materials can reduce grain boundaries, reduce the occurrence of side reactions, and increase compaction density, thereby increasing energy density and making the battery cycle life longer.

However, the preparation process of single crystal materials is complicated. Compared with the preparation of polycrystalline materials, the preparation of single crystal materials requires a higher sintering temperature, and high temperature is easy to cause the mixing of nickel and lithium. At the same time, during the sintering process, the primary particles will grow and the secondary particles will stick together, so grinding is required after sintering. If the sintering is not sufficient and quasi-single crystals are formed, the material will not achieve the expected effect. In addition, the current single crystal materials are mainly obtained by sintering small-particle precursors, and traditional small-particle precursors are prone to multi-level agglomeration and poor particle uniformity during the reaction, resulting in high sintering temperatures required for the sintering process, insufficient sintering, and increased sintering difficulty. In addition, the high temperature process is easy to cause the mixing of nickel and lithium, which in turn causes the performance of the cathode material to fail to achieve the expected effect.

Therefore, there is an urgent need to provide a cathode material precursor, a preparation method therefor, and use thereof to solve the above problems.

### SUMMARY

A cathode material precursor, a preparation method therefor, and use thereof are provided. A highly agglomerated, porous, and large-particle precursor with puff-shaped loose surface morphology is prepared. The large-particle precursor is formed by the agglomeration and growth of small particles. The small particles have more pores in the surface layer, which is conducive to entry of the lithium element into the interior of the particles during the sintering process to make the sintering more complete, thereby reducing the generation of quasi-single crystal particles and reducing the sintering difficulty of the precursor. At the same time, there are relatively dense crystal seeds inside the small particles, which are relatively easier to break after sintering, and the breakage can be relatively more uniform.

Embodiments of the present application adopt the following technical solutions:

In accordance with a first aspect of the present application, a cathode material precursor is provided, the cathode material precursor includes a precursor particle, where the precursor particle is formed by agglomerating a plurality of first particles, where the first particle is core-shell structure, and the core-shell structure has a core and a surface layer;
the core has dense seed crystals; and
the surface layer has a plurality of whiskers, where pores are provided between adjacent whiskers.

In some embodiments, a ratio of a particle size of the seed crystal to a particle size of the first particle ranges from 30% to 40%.

In some embodiments, a ratio of a particle size of the first particles to a particle size of the precursor particle ranges from 20% to 50%.

In some embodiments, the whisker has a thickness ranging from 10 nm to 30 nm.

In some embodiments, a specific surface area of the precursor particle ranges from 20m²/g to 40m²/g.

In some embodiments, the precursor particle further includes a shell layer, and the shell layer covers a surface layer of the core-shell structure.

In some embodiments, the shell layer has a thickness ranging from 0.2 µm to 0.5 µm.

In some embodiments, the core of the core-shell structure has a thickness ranging from 4 µm to 8 µm.

In accordance with a second aspect of the present application, a method for preparing a cathode material precursor is provided, which is prepared by the following steps:
mixing a variety of metal ion sources with water to obtain a mixed metal ion solution; and preparing a first alkali solution and a complexing agent respectively;
after adding water and introducing protective gas to a reactor, to which adding the first alkali solution and the complexing agent, so as to form a reaction substrate solution;
adding the first alkali solution, the complexing agent, and the mixed metal ion solution to the reactor in parallel to perform a nucleation reaction, and controlling a reaction atmosphere to be a first atmosphere, so as to form a seed crystal; when it is detected that the seed crystal content reaches a target requirement, reducing a degree of acidity or alkalinity of the reaction solution and controlling the reaction atmosphere to be a second atmosphere, so as to maintain growth reaction of seed crystal particles;
continuously feeding, filtering when it is detected that a liquid level in the reactor reaches a filtering requirement, maintaining a liquid level stable in the reactor, and when it is detected that a particle size of material in the reactor reaches a target requirement, stopping feeding and discharge the material into a container; and
performing solid-liquid separation on material in the container, and processing a separated filter cake to obtain the cathode material precursor.

In some embodiments, where the first atmosphere includes at least the protective gas, and the second atmosphere includes air and the protective gas.

In some embodiments, in the second atmosphere, air flow rate gradually increases with increase of solid content of material.

In some embodiments, an air flow rate of the first atmosphere ranges from 0 L/hr to 800 L/hr, and air flow rate of protective gas of the first atmosphere ranges from 100 L/hr to 800 L/hr.

In some embodiments, an air flow rate of the second atmosphere ranges from 300 L/hr to 800 L/hr, and air flow rate of protective gas of the second atmosphere ranges from 0 L/hr to 300 L/hr.

In some embodiments, a concentration of a complexing agent in the nucleation reaction ranges from 2.0 g/L to 10.0 g/L.

In some embodiments, a concentration of a complexing agent in the growth reaction ranges from 1.0 g/L to 10.0 g/L.

In some embodiments, a flow rate of the mixed metal ion solution ranges from 0.5 L/hr to 40 L/hr.

In some embodiments, a flow ratio of the first alkali solution, the complexing agent, and the mixed metal ion solution is in a range of 0-9: 3-20: 20-133.

In some embodiments, the reaction solution has a degree of acidity or alkalinity ranging from 10.0 to 11.5.

In accordance with a third aspect of the present application, a cathode material is provided, including the above-mentioned cathode material precursor.

In accordance with a fourth aspect of the present application, a secondary battery is provided, which includes a cathode plate, an anode plate, a separator, and an electrolyte; where the cathode plate contains the above-mentioned cathode material.

A cathode material precursor is provided. The cathode material precursor is formed by the aggregation and growth of small particles. The small particles have more pores in the surface layer, which is conducive to entry of the lithium element into the interior of the particles during the sintering process to make the sintering more complete, thereby reducing the generation of quasi-single crystal particles and reducing the sintering difficulty of the precursor. In addition, there are relatively dense crystal seeds inside the small particles, which are relatively easier to break after sintering, and the breakage can be relatively more uniform. Thus, a highly agglomerated, porous, and large-particle cathode material precursor with puff-like loose surface morphology can be obtained, and the cathode material precursor has an ultra-large specific surface area, a large internal porosity, and a low tap density.

### BRIEF DESCRIPTION OF DRAWINGS

In order to more clearly illustrate technical solutions in embodiments of the present application, drawings required for use in the embodiments or exemplary technical descriptions will be briefly introduced below. Obviously, the drawings described below are only some embodiments of the present application. For ordinary technicians in this field, other drawings can be obtained based on these drawings without paying creative work.
FIG. 1 is a flow chart of preparation process of a cathode material precursor provided in the embodiments of the present application;
FIG. 2 is a schematic diagram of structure of a main reaction vessel, a concentrator, a filter rod, a filter pump and a filter provided in an embodiment of the present application;
FIGS. 3-8 are electron microscope images of a cathode material precursor at different magnifications provided in Example 1 of the present application;
FIGS. 9-14 are electron microscope images of a cathode material precursor at different magnifications provided in Example 2 of the present application;
FIGS. 15-20 are electron microscope images of a cathode material precursor at different magnifications provided in Example 3 of the present application;
FIGS. 21-26 are electron microscope images of a cathode material precursor at different magnifications provided in Comparative Example 1 of the present application;
FIGS. 27-32 are electron microscope images of a cathode material precursor at different magnifications provided in Comparative Example 2 of the present application; and
FIGS. 33-38 are electron microscope images of a cathode material precursor at different magnifications provided in Comparative Example 3 of the present application.

### DETAILED DESCRIPTION

To clarify objectives, technical solutions, and advantages of the present application, the present application is further described in detail below in conjunction with the accompanying drawings and embodiments. It should be understood that the specific embodiments described herein are only used to explain the present invention and are not used to limit the present application.

In the present application, the term "and/or" describes the association relationship of the associated objects, indicating that there may be three relationships. For example, A and/or B can represent: A exists alone, A and B exist at the same time, and B exists alone. Among them, A and B can be singular or plural. The character "/" generally indicates that the previous and next associated objects are in an "or" relationship.

In this application, "at least one" means one or more, and "plurality" means two or more. "At least one of the following" or similar expressions refers to any combination of these items, including any combination of single items or plural items. For example, "at least one of a, b or c", or "at least one of a, b and c" can all mean: a, b, c, a-b (i.e. a and b), a-c, b-c or a-b-c, where a, b, c can be single or multiple.

It should be understood that in various embodiments of the present application, the size of the sequence number of each process does not mean the order of execution. Some or all steps can be executed in parallel or in sequence. The execution order of each process should be determined by its function and internal logic, and should not constitute any limitation on the implementation process of the embodiments of the present application.

The terms used in the embodiments of the present application are only for the purpose of describing specific embodiments and are not intended to limit the present application. The singular forms of "a", "said" and "the" used in the embodiments of the present application and the appended claims are also intended to include plural forms unless the context clearly indicates other meanings.

The terms "first", "second", etc. are used only for descriptive purposes to distinguish objects such as substances from each other, and should not be understood as indicating or implying relative importance or implicitly indicating the number of indicated technical features. For example, without departing from the scope of the embodiments of the present application, the first XX may also be referred to as the second XX, and similarly, the second XX may also be referred to as the first XX. Thus, a feature defined as "first", "second", etc. may explicitly or implicitly include one or more of the features.

In order to illustrate the technical solution described in the present application, the following is a detailed description in combination with specific drawings and embodiments.

In accordance with a first aspect of embodiments of the present application, a cathode material precursor is provided. The cathode material precursor includes precursor particles, the precursor particle is agglomerated by a plurality of first particles, the first particles are core-shell structures, the core-shell structure has a core and a surface layer, the core has dense crystal seeds, the surface has a plurality of whiskers, and there are pores between adjacent whiskers.

The embodiment of the present application provides a cathode material precursor, the precursor has particles formed by agglomeration and growth of small particles. The small particles have more pores in the surface layer, which is conducive to entry of the lithium element into the interior of the particles during the sintering process to make the sintering more complete, thereby reducing the generation of quasi-single crystal particles and reducing the sintering difficulty of the precursor. At the same time, there are relatively dense crystal seeds inside the small particles, which are relatively easier to break after sintering, and the breakage can be relatively more uniform. Thus, a highly agglomerated, porous, and large-particle cathode material precursor with puff-like loose surface morphology can be obtained, and the cathode material precursor has the characteristics of ultra-large specific surface area, large internal porosity, and low tap density, so that a single crystal material with a higher compaction density can be obtained, and the energy density is improved, so that the battery cycle life is higher.

The cathode material precursor in the embodiment of the present application is applicable to products such as binary cathode material precursor and ternary cathode material precursor.

In some embodiments, a ratio of particle size of the seed to particle size of the first particle ranges from 30% to 40%. There is no specific limitation on the ratio of the seed particle size to the first particle size. For example, the ratio of the seed particle size to the first particle size can be 30%, 35%, or 40%, etc.

In some embodiments, a ratio of particle size of a plurality of agglomerated first particles to particle size of the precursor particles ranges from 20% to 50%. The ratio of the particle size of the plurality of agglomerated first particles to the particle size of the precursor particles is not specifically limited, and illustratively, the ratio of the particle size of the plurality of agglomerated first particles to the particle size of the precursor particles can be 20%, 40%, or 50%, etc.

In some embodiments, the precursor particles of the embodiments of the present application are formed by agglomeration and growth of small particles, and there are relatively dense seeds inside the agglomerated small particles, which are relatively easier to break after sintering, and the breakage can be relatively more uniform.

In some embodiments, the molecular formula of the above-mentioned cathode material precursor may be NiₓCo_{y}Mn_{z}(OH)₂; where x+y+z=1, 0.6≤x≤1.0, 0<y≤0.20, and 0<z≤0.40.

In some embodiments, the core of the core-shell structure may have a thickness ranging from 4 µm to 8 µm. For example, the thickness of the core of the core-shell structure may be 4 µm, 5 µm, 6 µm, 7 µm, or 8 µm.

In some embodiments, the small particles of the present application have more pores in its surface layer, which is conducive to the entry of the lithium element into the interior of the particles during the sintering process to make the sintering more complete, thereby reducing the generation of quasi-single crystal particles and reducing the sintering difficulty of the precursor.

In some embodiments, the whisker may have a thickness ranging from 10 nm to 30 nm. The thickness of the whisker is not specifically limited. For example, the thickness of the whisker may be 10 nm, 20 nm, or 30 nm, etc.

In some embodiments, a specific surface area of the precursor particles ranges from 20m²/g to 40 m²/g. The specific surface area of the precursor particles is not specifically limited. For example, the specific surface area of the precursor particles may be 20 m²/g, 30m²/g, or 40m²/g, etc.

The embodiment of the present application provides a cathode material precursor. Whiskers in a surface layer of small particles of the cathode material precursor are relatively thin and the surface layer has a porous puff-like morphology. The relatively thin whiskers and relatively large specific surface area reduce strength of the particles, thereby reducing difficulty of sintering, thereby enabling more complete sintering; and since the strength of the particles is reduced, the difficulty of crushing after sintering is reduced, thereby making the particles easy to crush.

In some embodiments, the precursor particle further includes a shell layer, which covers the surface layer of the core-shell structure; the shell layer has a thickness ranging from 0.2 µm to 0.5 µm. The thickness of the shell layer is not specifically limited, and for example, the thickness of the shell layer may be 0.2 µm, 0.3 µm, or 0.5 µm, etc.

In some embodiments, the core of the core-shell structure has a thickness ranging from 4 µm to 8 µm. For example, the thickness of the core may be 4 µm, 5 µm, 6 µm, 7 µm, or 9 µm, etc.

The embodiment of the present application provides a cathode material precursor. The strength of the surface of the large-particle precursor may be provided through the shell layer outside the surface layer, thereby preventing the cathode material precursor particles from being broken caused by equipment during washing, drying and other processes, thereby improving success rate of preparing the cathode material precursor particles; and the shell layer is thinner, it has less impact on normal sintering and performance of material.

In accordance with a second aspect of embodiments the present application, a method for preparing a cathode material precursor is provided. The method includes the following steps:
mix a plurality of metal ion sources with water to obtain a mixed metal ion solution; and respectively prepare first alkali solution and a complexing agent;
after adding water and introducing protective gas into a reactor, to which add the first alkali solution and the complexing agent to form a reaction substrate solution;
add the first alkali solution, the complexing agent, and the mixed metal ion solution to the reactor in parallel to perform a nucleation reaction and control reaction atmosphere to be a first atmosphere, so as to form a seed crystal; when it is detected that the seed crystal content reaches a target requirement, reduce a degree of acidity or alkalinity of the reaction solution and control the reaction atmosphere to be a second atmosphere, so as to maintain growth reaction of seed crystal particles;
continuously feed, filter when it is detected that a liquid level in the reactor reaches a filtering requirement, and maintain a liquid level in the reactor stable, and, when it is detected that particle size of material in the reactor reaches a target requirement, stop feeding and discharge the material into a container; and
perform solid-liquid separation on material in the container, and process separated filter cake to obtain the cathode material precursor.

The embodiment of the present application provides a method for preparing a cathode material precursor. By adopting an intermittent process, controlling the amount of nitrogen and air introduced in a growth reaction stage, and combining stirring speed during the reaction process, a large-particle cathode material precursor with high agglomeration, porosity and puff-shaped loose surface morphology is formed.

In some embodiments, the cathode material precursor is ternary cathode precursor material, and the preparation method includes the following specific steps: step 1, step 2, step 3, step 4 and step 5.

In step 1, according to molar ratio of nickel (Ni) element, cobalt (Co) element and manganese (Mn) element required for the cathode material precursor, a Ni soluble salt, a Co soluble salt, and a Mn soluble salt are selected according to the molar ratio and mixed with pure water, to prepare a mixed metal ion solution with a first concentration; and, a first alkali solution with a second concentration and a complexing agent with a third concentration are prepared respectively.

In some embodiments, the mixed metal ion solution includes but is not limited to the Ni soluble salt, the Co soluble salt, and the Mn soluble salt, and can also be alkali solution or other sources, which is subject to actual application.

In some embodiments, a range of the molar ratio of the Ni soluble salt, the Co soluble salt, and the Mn soluble salt in step 1 above may include (88-96): (2-8): (2-8). For example, the molar ratio of the Ni soluble salt, the Co soluble salt, and the Mn soluble salt may be 88:6:6, 88:4:8, or 96:2:2, etc.

In some embodiments, the pure water in step 1 above may be deionized water. In some embodiments, the deionized water may be hot water.

In some embodiments, a value range of the first concentration in step 1 above may include 1.2-2.7 mol/L. For example, the first concentration may be 1.2 mol/L, 1.8 mol/L, 2.3 mol/L, or 2.7 mol/L, etc.

In some embodiments, the first alkali solution in step 1 is not specifically limited. For example, the first alkali solution may be sodium hydroxide (NaOH) solution, etc.

In some embodiments, the second concentration of the first alkali solution in step 1 may range from 1.0 mol/L to 13.0 mol/L. For example, the second concentration may be 1.0 mol/L, 3.0 mol/L, 10.5 mol/L, or 13.0 mol/L, etc.

In some embodiments, the complexing agent in step 1 is not specifically limited. For example, the complexing agent may be ammonia (NH₃·H₂O) or the like.

In some embodiments, the third concentration of the complexing agent in step 1 may range from 1.0 mol/L to 12.0 mol/L. For example, the third concentration may be 1.0 mol/L, 3.0 mol/L, 6.0 mol/L, or 12 mol/L, etc.

It should be noted that the order of preparing the mixed metal ion solution with the first concentration, and respectively preparing the first alkali solution with the second concentration and the complexing agent with the third concentration in step 1 is not specifically limited. For example, the mixed metal ion solution with the first concentration can be prepared first, and then the first alkali solution with the second concentration and the complexing agent with the third concentration can be prepared respectively; or, the first alkali solution with the second concentration and the complexing agent with the third concentration can be prepared respectively first, and then the mixed metal ion solution with the first concentration can be prepared; or, the mixed metal ion solution with the first concentration, the first alkali solution with the second concentration, and the complexing agent with the third concentration can be prepared at the same time.

In step 2, water is introduced into and returned to the reactor. Specifically, after water is added to and protective gas is introduced into the reactor, the first alkali solution and the complexing agent are added to form a reaction substrate solution.

In some embodiments, the type of the reactor in step 2 is not specifically limited. For example, the reactor may be a reaction vessel, etc.

In some embodiments, the above step 2, the water is introduced into and returned to the reactor may include: open a jacket of the reaction vessel, feed water into and returning water.

In some embodiments, after adding first amount of pure water and introducing a protective gas into the reactor, first alkali solution and a complexing agent are added at a first temperature and a first stirring speed to form a reaction substrate solution.

In some embodiments, a value range of the first amount of pure water may include 40-200 L. In some embodiments, the value range of the first amount includes 50-160 L. For example, the first amount may be 50 L, 100 L, or 160 L, etc.

In some embodiments, the protective gas is not specifically limited. For example, the protective gas may include nitrogen (N₂). The following embodiments are all described with the protective gas being N₂.

In some embodiments, the reaction substrate solution may have a degree of acidity or alkalinity(pH) value ranging from 11.0 to 12.5 (45°C). In some embodiments, the pH value of the reaction substrate solution may range from 11.5 to 12.3 (45°C). For example, the pH value of the reaction substrate solution may be 11.5 (45°C), 12.0 (45°C), or 12.3 (45°C) , etc.

In some embodiments, a value range of the complexing agent concentration may include 2.0 g/L-10.0 g/L. In some embodiments, the value range of the complexing agent concentration may include 4.0 g/L -9.0 g/L. For example, the complexing agent concentration may be 4.0 g/L, 6.0 g/L, or 9.0 g/L, etc.

In some embodiments, a value range of the first temperature may include 50-70°C. For example, the first temperature may be 50°C, 60°C, or 70°C, etc.

In some embodiments, a value range of the first stirring speed mentioned above may include 400-600 rpm. Exemplarily, the first stirring speed may be 400 rpm, 500 rpm, or 600 rpm, etc.

In step 3, at the second stirring speed, the first alkali solution, the complexing agent, and the mixed metal ion solution are added to the reactor in a first flow ratio and flowed to perform a nucleation reaction, and the reaction temperature is controlled to be the first temperature, the reaction atmosphere is controlled to be a first atmosphere, a degree of acidity or alkalinity of reaction solution is controlled to be a first degree of acidity or alkalinity and concentration of the complexing agent is controlled to be the fourth concentration, so as to form a seed crystal; when it is detected that the seed crystal content reaches a target requirement, the first degree of acidity or alkalinity is reduced, and the reaction temperature is controlled to be the second temperature, the reaction atmosphere is controlled to be a second atmosphere, the degree of acidity or alkalinity of the reaction solution is controlled to be a second degree of acidity or alkalinity and the concentration of the complexing agent is controlled to be the fifth concentration, and growth reaction of the seed crystal particles in the reactor are maintained.

In some embodiments, the first atmosphere in step 3 includes at least protective gas, and the second atmosphere includes protective gas and air.

In some embodiments, amount of the mixed metal ion solution added in step 3 may range from 0.5 L/hr to 40 L/hr. In some embodiments, the amount of the mixed metal ion solution added may range from 1 L/hr to 30 L/hr. For example, the amount of the mixed metal ion solution added may be 1 L/hr, 10 L/hr, 20 L/hr, or 30 L/hr, etc.

In some embodiments, a value range of speed of the second stirring in the above step 3 may include 50-600 rpm. In some embodiments, the value range of the speed of the second stirring includes 100-550 rpm. For example, the speed of the second stirring may be 100 rpm, 200 rpm, 300 rpm, 400 rpm, or 550 rpm.

In some embodiments, a value range of the first temperature in the above step 3 may include 40.0-75.0°C. In some embodiments, the value range of the first temperature includes 45.0-65.0°C. For example, the first temperature may be 45.0°C, 55.0°C, or 65.0°C, etc.

In some embodiments, a pH value of the reaction solution of the nucleation reaction in the above step 3 may range from 11.0 to 12.5 (45°C). In some embodiments, the pH value of the reaction solution of the nucleation reaction may range from 11.5 to 12.3 (45°C). For example, the pH value of the reaction solution of the nucleation reaction may be 11.5 (45°C), 12.0 (45°C), or 12.3 (45°C), etc.

In some embodiments, a value range of concentration of the complexing agent in the nucleation reaction in the above step 3 may include 2.0 g/-10.0 g/L. In some embodiments, the concentration of the complexing agent in the nucleation reaction may range from 4.0 to 9.0 g/L. For example, the concentration of the complexing agent in the nucleation reaction may be 4.0 g/L, 6.0 g/L, 7.0 g/L, or 9.0 g/L, etc.

In some embodiments, the first atmosphere in step 3 is not specifically limited. For example, the first atmosphere may include N₂; or, the first atmosphere may include N₂ and air and so on, where the air mainly refers to oxygen (O₂).

In some embodiments, a value range of a flow rate of the nitrogen under liquid in the first atmosphere in the above step 3 may include 100 L/hr-800 L/hr. In some embodiments, the value range of the flow rate of the nitrogen under liquid in the first atmosphere includes 150 L/hr -700 L/hr. For example, the flow rate of the nitrogen under liquid in the first atmosphere may be 150 L/hr, 300 L/hr, 600 L/hr, or 700 L/hr, etc.

In some embodiments, a value range of the flow rate of the air under liquid in the first atmosphere in the above step 3 may include 0 L/hr-800 L/hr. In some embodiments, the value range of the flow rate of the air under liquid in the first atmosphere includes 0 L/hr -700 L/hr. For example, the flow rate of the air under liquid in the first atmosphere may be 0 L/hr, 300 L/hr, 600 L/hr, or 700 L/hr, etc.

In some embodiments, a pH value range of the reaction solution of the growth reaction in the above step 3 may include 10.0-11.5 (45°C). In some embodiments, the pH value range of the reaction solution of the growth reaction includes 10.2-11.3 (45°C). For example, the pH value of the reaction solution of the growth reaction may be 10.2 (45°C), 11.0 (45°C), or 11.3 (45°C) , etc.

In some embodiments, concentration of the complexing agent in the growth reaction in step 3 may range from 1.0 g/L to 10.0 g/L. In some embodiments, the concentration of the complexing agent in the growth reaction may range from 3.0 to 9.0 g/L. For example, the concentration of the complexing agent in the growth reaction may be 3.0 g/L, 5.0 g/L, 8.0 g/L, or 9.0 g/L, etc.

In some embodiments, a value range of the flow rate of the nitrogen under liquid in the second atmosphere in the growth reaction in the above step 3 may range from 0 L/hr to 300 L/hr. In some embodiments, the value range of the flow rate of the nitrogen under liquid in the second atmosphere in the growth reaction may range from 0 L/hr to 250 L/hr. For example, the flow rate of the nitrogen under liquid in the second atmosphere in the growth reaction may be 0 L/hr, 50 L/hr, 100 L/hr, or 250 L/hr, etc.

In some embodiments, a value range of the flow rate of the air under liquid in the second atmosphere in the above step 3 may include 300 L/hr-800 L/hr. In some embodiments, the value range of the flow rate of the air under liquid in the second atmosphere includes 350 L/hr -750 L/hr. Exemplarily, the low rate of the air under liquid in the second atmosphere may be 350 L/hr, 500 L/hr, 600 L/hr, or 750 L/hr, etc.

In some embodiments, step 3 may control introducing amount of N₂ and air through an intermittent process to adjust the proportion of the oxidant (air), so that whiskers in a surface layer of particles become thinner and the porosity of the particles increases. In this way, the oxidation amount can be increased with the increase of synthesis time, so that the pores inside the particles are uniform and the morphology is porous puff-shaped. In addition, since the surface whisker laths are thinner and the particle strength is reduced, the stirring speed is reduced according to the particle size during the reaction to avoid the phenomenon of particle breakage caused by stirring. In addition, pH values of the reaction, temperature, flow rate of metal solution, alkali and the complexing agent are kept stable during the synthesis process.

In some embodiments, during the growth reaction stage in step 3, the air flow rate in the second atmosphere in the reaction vessel gradually increases as the solid content of the system increases. Thus, the growth of the seed crystal can be better achieved by controlling the content of nitrogen and oxygen in the growth reaction stage.

In step 4, feeding according to step 3 is continued, when it is detected that a liquid level in the reactor reaches a filtering requirement, the filter is started to start filtering, and a liquid level in the reactor is maintained stable; when it is detected that particle size of material in the reactor reaches a target requirement, the feeding to the reactor is stopped, and stirring is continued and aging is performed for the first time, and then the material is discharged into the container.

In some embodiments, the type of the above-mentioned filter is not specifically limited. For example, the filter may be a concentrator, etc.

In some embodiments, the type of the above-mentioned container is not specifically limited. For example, the container may be a qualified slurry tank, a transfer tank, etc.

In some embodiments, the particle size of the material in the reactor in step 4 may range from 10 µm to 20 µm. For example, the particle size of the material may be 10 µm, 15 µm, or 20 µm, etc.

In some embodiments, the first time may range from 1 hr to 2 hrs, and for example, the first time may be 1 hr, 1.5 hrs, or 2 hrs, etc.

In some embodiments, in step 4, feeding according to step 3 is continued, when it is detected that a liquid level in the reactor reaches a filtering requirement, the filter is started to start filtering, and a liquid level in the reactor is maintained stable; when it is detected that particle size of the material in the reactor reaches a target requirement, feeding to the reactor is stopped, and stirring is continued and aging is performed for the first time, and then then the material is discharged into the container, which may include:

In step 41, feeding according to step 3 is continued, when it is detected that a liquid level in the reactor reaches a filtering requirement, the filter is started to start filtering, and a liquid level in the reactor is maintained stable and air is introduced; when it is detected that particle size of the material in the reactor reaches a target requirement, feeding to the reactor is stopped, and stirring is continued and aging is performed for the first time, and then then the material is discharged into the container

Therefore, by introducing air into the reactor before detecting that the particle size of the material in the reactor reaches the target requirement, the cathode material precursor can form a shell layer with a certain thickness, which can improve the strength of the surface of the cathode material precursor, avoid particle breakage of the cathode material precursor caused by equipment during the washing, drying and other processes, and improve the success rate of the preparation of the cathode material precursor.

In step 5, solid-liquid separation is performed on material in the container, the separated filter cake is washed with second alkali solution, and then rinsed with pure water to obtain a washed filter cake.

In some embodiments, the second alkali solution in step 5 is not specifically limited. For example, the second alkali solution may be NaOH solution, potassium hydroxide (KOH) solution, etc.

In some embodiments, the washed filter cake is dried, and then sieved and demagnetized in sequence to obtain a cathode material precursor.

In the existing art, the preparation of polycrystalline materials sometimes considers the use of large particles mixed with small particles, while the preparation of single crystal materials often uses small particles to avoid the problem of not determining whether the large particles are uniform after sintering, crushing and other processes. In the embodiment of the present application, the small particles with the core-shell structure are agglomerated to form a large-particle precursor during the preparation of the precursor. Thus, during the sintering process, lithium ions can more fully penetrate the precursor particles, and the sintering is more sufficient. Then, when being crushed, the large-particle precursor is more easily broken into multiple small particles, which can not only reduce the difficulty of sintering, but also improve the mixed arrangement of nickel and lithium during the sintering process. At the same time, the large-particle precursor is crushed after sintering to prepare small-particle single crystal materials, and the sintering process is more sufficient, which can reduce the formation of quasi-single crystals and reduce side reactions, thereby obtaining single crystal materials with higher compaction density, that is, it can solve the current problems of high sintering difficulty of single crystal ternary material precursors and reduce the generation of quasi-single crystal particles, which is conducive to industrial production.

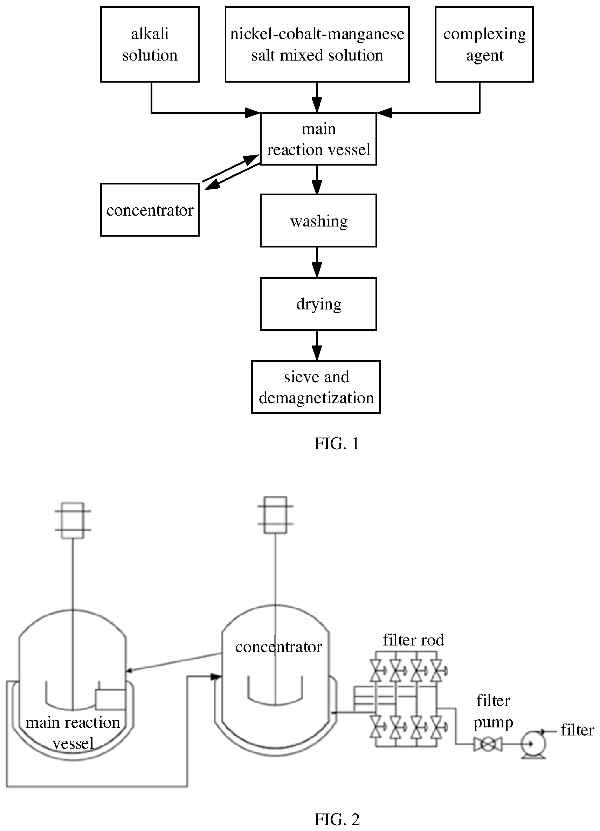

The following is a specific preparation method for a cathode material precursor, as shown in FIG. 1, including the following steps: step 1, step 2, step 3, step 4, step 5, step 6 and step 7.

Step 1 is in a stage of solution preparation.

According to the molar ratio of Ni, Co, and Mn in the required nickel-cobalt-manganese hydroxide, a Ni soluble salt, a Co soluble salt, and a Mn soluble salt are selected as raw materials, and then added with pure water to prepare nickel-cobalt-manganese salt mixed solution with a concentration range of 1.2-2.7 mol/L.

A range of the molar ratio of the nickel soluble salt, the cobalt soluble salt and the manganese soluble salt is (88-96): (2-8): (2-8).

A NaOH solution with a concentration range of 1.0-13.0 mol/L is prepared as the alkali solution.

A NH₃·H₂O with a concentration range of 1.0-12.0 mol/L is prepared as the complexing agent.

In step 2, a jacket of the main reaction vessel with a volume range of 180-220 L is opened, and water is allowed to enter and return.

Step 3 is in a stage of reaction substrate solution formation.

Pure water with a volume range of 90-110 L is added to the main reaction vessel, and N₂ is introduced into the main reaction vessel. A temperature range of the main reaction vessel is controlled to 50-70°C, and a stirring speed is controlled to 400-600 rpm. Then the NaOH solution and the NH₃·H₂O solution prepared in step 1 are added to form the reaction substrate solution.

Step 4 is in a stage of preparation of cathode material precursor particles.

In step 41, under continuous stirring, the NaOH solution, the NH₃·H₂O solution, and the mixed metal ion solution prepared in step 1 are added to the main reaction vessel in parallel at a first flow ratio for reaction, and reaction temperature, reaction atmosphere, pH of reaction solution and ammonia concentration are controlled at a stirring speed range of 450-550 rpm to form seed crystals in the reactor.

The first flow ratio range is (0-9): (3-20): (20-133).

Step 42 is a stage of pH reduction and stable growth: when the amount of seed crystals reaches a target requirement, pH of the reaction solution is reduced, and the reaction temperature, the reaction atmosphere, the pH of the reaction solution, and the ammonia concentration are continued to be controlled to maintain the growth of seed crystal particles in the main reaction vessel.

In step 5, continue feeding according to step 4, as shown in FIG. 2, when a liquid level in the main reaction vessel reaches a filtering requirement, the concentrator is started to start filtering, a liquid level in the main reaction vessel is maintained stable, and when it is detected that particle size of material in the main reaction vessel reaches a requirement, the feeding to the main reaction vessel is stopped, and the stirring is continued and aging is performed for 1-2 hrs, and then the seed crystals are discharged into a qualified slurry tank.

In step 6, the slurry in the qualified slurry tank in step 5 is separated into a solid and a liquid, and a separated filter cake is washed with NaOH solution or KOH solution, and then is rinsed with pure water to obtain a washed filter cake.

In step 7, the washed filter cake is dried in step 6 with a drying device, and then sieved and demagnetized in turn to obtain a porous, puff-shaped nickel-cobalt-manganese hydroxide.

In accordance with a third aspect of embodiments of the present application, a cathode material is provided. The cathode material includes the cathode material precursor mentioned above.

In the cathode material provided in the embodiment of the present application, during the sintering process, lithium ions can more fully penetrate into the precursor particles, and the sintering is more complete. When being crushed, the large-particle precursor is more easily crushed into multiple small particles, which can not only reduce the sintering difficulty, but also reduce the nickel-lithium mixed arrangement phenomenon during the sintering process. In addition, the large-particle precursor is crushed after sintering to prepare small-particle single crystal materials. The sintering process is more complete, which can reduce the formation of quasi-single crystals and reduce side reactions, thereby obtaining a cathode material with a higher compaction density, and is conducive to industrial production.

In accordance with a fourth aspect of embodiments of the present application, a secondary battery is provided. The secondary battery includes a cathode plate, an anode plate, a separator, and an electrolyte; where the cathode plate contains the above-mentioned cathode material.

The embodiment of the present application provides a secondary battery, which has a high cycle life and very good performance.

In some embodiments, the cathode plate includes a current collector and a cathode material coated on the current collector, the cathode material is obtained by sintering the cathode material precursor mentioned-above, the separator is arranged between the cathode plate and the anode plate, and the electrolyte is filled in the secondary battery.

The following uses multiple specific embodiments to illustrate a cathode material precursor, a preparation method therefor, and use thereof in the embodiments of the present application.

### Example 1

This example provides a method for preparing a cathode material precursor, including the following steps: step 1, step 2, step 3, step 4, step 5, step 6 and step 7.

In step 1, A Ni soluble sulfate, a Co soluble sulfate, and a Mn soluble sulfate were selected according to a molar ratio of 88:6:6, and mixed with deionized water to prepare mixed metal sulfate solution with a concentration of 2.3 mol/L.

A NaOH solution with a concentration of 10.5 mol/L was prepared.

A NH₃·H₂O solution with a concentration of 6 mol/L was prepared.

The NaOH solution, the NH₃·H₂O solution, and the mixed metal sulfate solution were maintained at a constant temperature of 25°C.

In step 2, a jacket of a 180 L reaction vessel was opened to allow water to enter and return the reaction vessel.

In step 3, 100 L hot pure water was added to a reaction vessel with a volume of 200 L, a temperature of the reaction vessel was controlled to 60°C and a speed of stirring was controlled at 500 rpm, then the NaOH solution and the NH₃·H₂O solution were pumped into the reaction vessel, the concentration of NH₃·H₂O solution was maintained at 6.0 g/L before adding alkali, an initial pH was 11.60 at 45°C, and a reaction substrate solution of the reaction vessel was prepared.

In step 4, after the reaction started, the flow rates of the NaOH solution, the NH₃·H₂O solution, and the mixed metal sulfate solution were set to 9 mL/min, 3 mL/min, and 20 mL/min respectively, and were continuously pumped into a 60°C constant-temperature reaction vessel through a feeding tank for reaction respectively. At a stirring speed of 500 rpm, the flow rate of NaOH solution was adjusted to stabilize the pH value of the synthesis system at 11.5, the flow rate of the NH₃·H₂O solution was adjusted to maintain the NH₃·H₂O concentration of the synthesis system at 4.0 g/L, flow rate of N₂ under liquid was adjusted to 150 L/hr and flow rate of air under liquid was adjusted to 100 L/hr in atmosphere in the reaction vessel, and nucleation time was maintained for 3 min.

At a stirring speed of 500rpm, the flow of the NaOH solution was shut off and was restored after the pH value was quickly adjusted to 10.2, the flow of NH₃·H₂O solution was adjusted to maintain the NH₃·H₂O concentration of the synthesis system at 4.0 g/L, and the N₂ flow rate in atmosphere in the reaction vessel was adjusted to 150 L/hr and the air flow rate in the atmosphere of the reaction vessel was adjusted to 100 L/hr.

After starting the reaction for 1h, the flow rate of the mixed metal sulfate solution was adjusted and slowly increased to 267 mL/min in 6 hrs. The flow rates of the NaOH solution and the NH₃·H₂O solution were simultaneously adjusted to stabilize the pH value at 10.2 and the ammonia value at 3.0. After starting the reaction for 4 hrs, the flow rate of N₂ under liquid in the atmosphere in the reaction vessel was adjusted to 100 L/hr and the flow rate of air under liquid in the atmosphere in the reaction vessel was adjusted to 150 L/hr. The oxygen content in the reaction atmosphere was increased by 1% every 4 hours. The stirring speed was reduced in steps according to the particle size D50 of the material. When D50 reaches 8 µm, the stirring speed was reduced to and maintained at 200 rpm. When D50 reached 13.5-13.6 µm, the reaction was stopped to obtain a porous, puff-shaped large-particle ternary precursor slurry.

In step 5, the ternary precursor slurry that meets the particle size requirements was discharged into the transfer tank and stirred.

In step 6, alkaline washing and pure water washing were performed on the ternary precursor slurry alternately.

In step 7, the ternary precursor slurry was evenly distributed in a drying device for drying. The drying temperature was 120°C, the drying time was 12 hrs, and the mesh of screens was 325 in double layers.

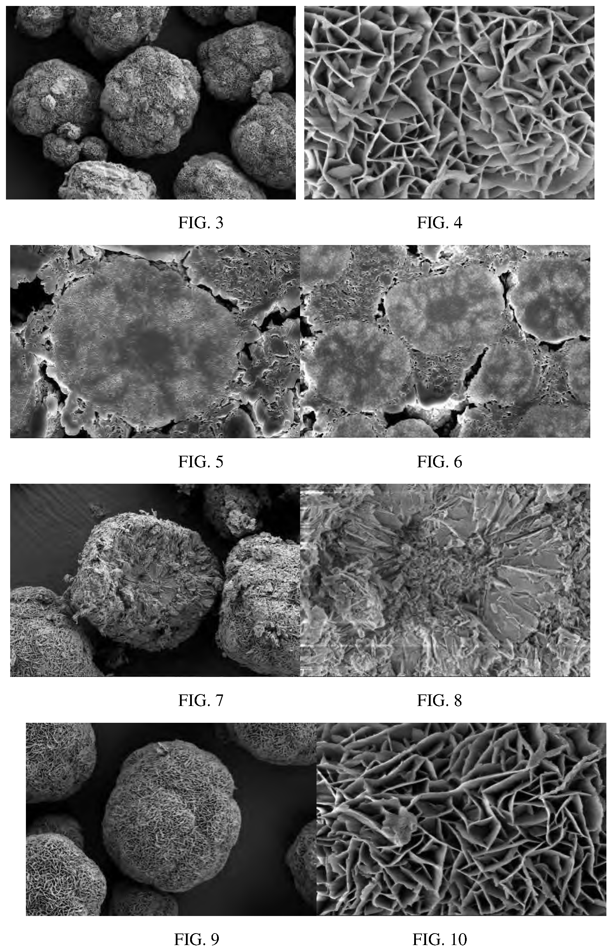

Through the above steps, a cathode material precursor with high agglomeration, porous puff-like morphology, and an average particle size of 10-20 µm was obtained as shown in FIGS. 3-8.

### Example 2

This example provides a method for preparing a cathode material precursor, including the following steps: step 1, step 2, step 3, step 4, step 5, step 6 and step 7.

In step 1, A Ni soluble sulfate, a Co soluble sulfate, and a Mn soluble sulfate were selected according to a molar ratio of 88:4:8, and mixed with deionized water to prepare mixed metal sulfate solution with a concentration of 2.3 mol/L.

A NaOH solution was prepared with a concentration of 10.5 mol/L.

A NH₃·H₂O solution was prepared with a concentration of 6 mol/L.

The NaOH solution, the NH₃·H₂O solution, and the mixed metal sulfate solution were maintained at a constant temperature of 25°C.

In step 2, a jacket of a 180 L reaction vessel was opened to allow water to enter and return the reaction vessel.

In step 3, 100 L hot pure water was added to a reaction vessel with a volume of 200 L, a temperature of the reaction vessel was controlled to 60°C and a speed of stirring was controlled at 500 rpm, then the NaOH solution and the NH₃·H₂O solution were pumped into the reaction vessel, the concentration of NH₃·H₂O solution was maintained at 6.0 g/L before adding alkali, an initial pH was 11.60 at 45°C, and a reaction substrate solution of the reaction vessel was prepared.

In step 4, After starting the reaction, the flow rates of NaOH solution, NH₃·H₂O solution, and mixed metal sulfate solution were set to 0 mL/min, 20 mL/min, and 133 mL/min, respectively, and were continuously pumped into a 60°C constant-temperature reaction vessel through a feeding tank for reaction. At a stirring speed of 500 rpm, the pH value was quickly adjusted to 10.8, the flow rate of the NaOH solution was adjusted to stabilize the pH value of the synthesis system at 10.8, the flow rate of NH₃·H₂O solution was adjusted to maintain the NH₃·H₂O concentration of the synthesis system at 6.0 g/L, and the flow rate N₂ under liquid in the atmosphere in the reaction vessel was adjusted to 400 L/hr, and the flow rate of air was under liquid was adjusted to 400 L/hr.

After starting the reaction for 1h, the flow rate of the mixed metal sulfate solution was adjusted and slowly increased to 417 mL/min in 6h. The flow rates of the NaOH solution and the NH₃·H₂O solution were simultaneously adjusted to stabilize the pH value at 10.8 and the ammonia value at 6.0. After starting the reaction for 4h, the flow rate of N₂ under liquid in the atmosphere in the reaction vessel was adjusted to 180 L/hr and the flow rate of air under liquid in the atmosphere in the reaction vessel was adjusted to 400 L/hr. The oxygen content in the reaction atmosphere was increased by 1% every 4 hours. The stirring speed was reduced in steps according to the particle size D50 of the material. When D50 reaches 8 µm, the stirring speed was reduced to and maintained at 200 rpm. When D50 reached 13.5-13.6 µm, the reaction was stopped to obtain a porous, puff-shaped large-particle ternary precursor slurry.

In step 5, the ternary precursor slurry that meets the particle size requirements was discharged into the transfer tank and stirred.

In step 6, alkaline washing and pure water washing were performed on the ternary precursor slurry alternately.

In step 7, the ternary precursor slurry was evenly distributed in a drying device for drying. The drying temperature was 120°C, the drying time was 12 hrs, and the mesh of screens was 325 in double layers.

Through the above steps, a cathode material precursor with high agglomeration, porous puff-like morphology, and an average particle size of 10-20 µm may be obtained as shown in FIGS. 9-14.

### Example 3

This example provides a method for preparing a cathode material precursor, including the following steps: step 1, step 2, step 3, step 4, step 5, step 6 and step 7.

In step 1, selected A Ni soluble sulfate, a Co soluble sulfate, and a Mn soluble sulfate according to a molar ratio of 96:2:2, and mixed them with deionized water to prepare mixed metal sulfate solution with a concentration of 2.3 mol/L.

NaOH solution was prepared with a concentration of 10.5 mol/L.

NH₃·H₂O solution was prepared with a concentration of 6 mol/L.

The NaOH solution, the NH₃·H₂O solution, and the mixed metal sulfate solution are maintained at a constant temperature of 25°C.

In step 2, a jacket of a 180 L reaction vessel was opened to allow water to enter and return the reaction vessel.

In step 3, 100 L hot pure water was added to a reaction vessel with a volume of 200 L, a temperature of the reaction vessel was controlled to 60°C and a speed of stirring was controlled at 500 rpm, then the NaOH solution and the NH₃·H₂O solution were pumped into the reaction vessel, the concentration of NH₃·H₂O solution was maintained at 6.0 g/L before adding alkali, an initial pH was 11.60 at 45°C, and a reaction substrate solution of the reaction vessel was prepared.

In step 4, after the reaction started, the flow rates of the NaOH solution, the NH₃·H₂O solution, and the mixed metal sulfate solution were set to 0 mL/min, 20 mL/min, and 133 mL/min respectively, and were continuously pumped into a 60°C constant-temperature reaction vessel through a feeding tank for reaction respectively. At a stirring speed of 500 rpm, the pH value was quickly adjusted to 11.3, the flow rate of the NaOH solution was adjusted to stabilize the pH value of the synthesis system at 11.3, the flow rate of the NH₃·H₂O solution was adjusted to maintain the NH₃·H₂O concentration of the synthesis system at 9.0 g/L, flow rate of N₂ under liquid was adjusted to 700 L/hr and flow rate of air under liquid was adjusted to 700 L/hr in atmosphere in the reaction vessel.

After starting the reaction for 1 hr, the flow rate of the mixed metal sulfate solution was adjusted and slowly increased to 417mL/min in 6h. The flow rates of the NaOH solution and the NH₃·H₂O solution were simultaneously adjusted to stabilize the pH value at 11.3 and the ammonia value at 9.0. After starting the reaction for 4h, the flow rate of N₂ under liquid in the atmosphere in the reaction vessel was adjusted to 250 L/hr and the flow rate of air under liquid in the atmosphere in the reaction vessel was adjusted to 750 L/hr. The oxygen content in the reaction atmosphere was increased by 1% every 4 hours. The stirring speed was reduced in steps according to the particle size D50 of the material. When D50 reaches 8 µm, the stirring speed was reduced to and maintained at 200rpm. When D50 reached 13.5-13.6 µm, the reaction was stopped to obtain a porous, puff-shaped large-particle ternary precursor slurry.

In step 5, the ternary precursor slurry that meets the particle size requirements was discharged into the transfer tank and stirred.

In step 6, alkaline washing and pure water washing were performed on the ternary precursor slurry alternately.

In step 7, the ternary precursor slurry was evenly distributed in a drying device for drying. The drying temperature was 120°C, the drying time was 12 hrs, and the mesh of screens was 325 in double layers.

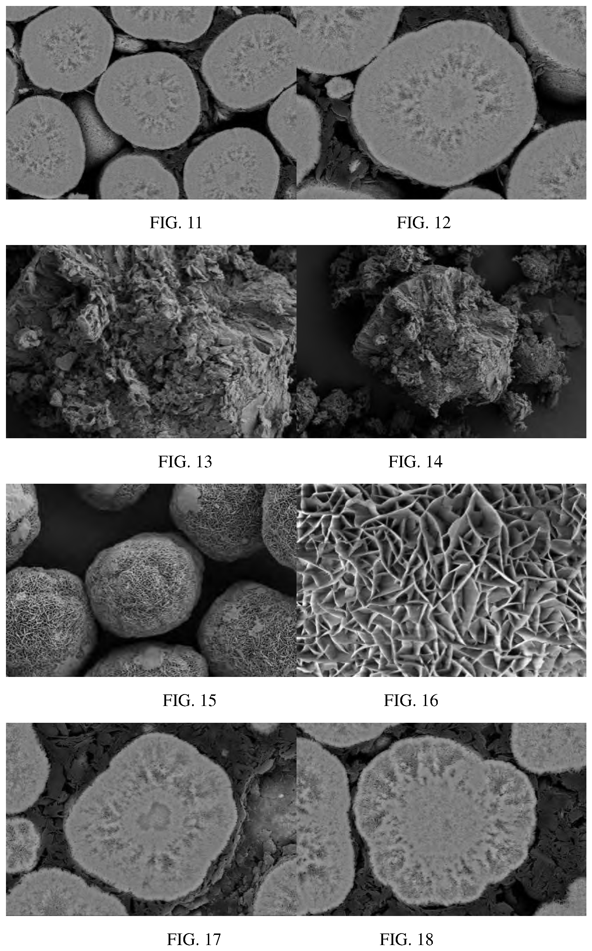

Through the above steps, a cathode material precursor with high agglomeration, porous puff-like morphology, and an average particle size of 10-20 µm may be obtained as shown in FIGS. 15-20.

### Comparative Example 1

This comparative example provides a method for preparing a cathode material precursor, including the following steps: step 1, step 2, step 3, step 4, step 5, step 6 and step 7.

In step 1, selected A Ni soluble sulfate, a Co soluble sulfate, and a Mn soluble sulfate in a molar ratio of 88:6:6 ,and mixed them with deionized water to prepare a mixed metal sulfate solution with a concentration of 2.3 mol/L.

NaOH solution was prepared with a concentration of 10.5 mol/L.

NH₃·H₂O solution was prepared with a concentration of 6 mol/L.

The NaOH solution, the NH₃·H₂O solution, and the mixed metal sulfate solution are maintained at a constant temperature of 25°C.

In step 2, a jacket of a 180 L reaction vessel was opened to allow water to enter and return the reaction vessel.

In step 3, 100 L hot pure water was added to a reaction vessel with a volume of 200 L, a temperature of the reaction vessel was controlled to 60°C and a speed of stirring was controlled at 500 rpm, then the NaOH solution and the NH₃·H₂O solution were pumped into the reaction vessel, the concentration of NH₃·H₂O solution was maintained at 6.0 g/L before adding alkali, an initial pH was 11.60 at 45°C, and a reaction substrate solution of the reaction vessel was prepared.

In step 4, after the reaction started, the flow rates of the NaOH solution, the NH₃·H₂O solution, and the mixed metal sulfate solution were set to 0 mL/min, 20 mL/min, and 133 mL/min respectively, and were continuously pumped into a 60°C constant-temperature reaction vessel through a feeding tank for reaction respectively. At a stirring speed of 500 rpm, the pH value was quickly adjusted to 10.2, the flow rate of the NaOH solution was adjusted to stabilize the pH value of the synthesis system at 10.2, the flow rate of the NH₃·H₂O solution was adjusted to maintain the NH₃·H₂O concentration of the synthesis system at 4.0 g/L, flow rate of N₂ under liquid was adjusted to 150 L/hr in atmosphere in the reaction vessel.

After starting the reaction for 1h, the flow rate of the mixed metal sulfate solution was adjusted and slowly increased to 417mL/min in 6h. The flow rates of the NaOH solution and the NH₃·H₂O solution were simultaneously adjusted to stabilize the pH value at 10.2 and the ammonia value at 3.0. The flow rate of N₂ under liquid in the atmosphere in the reaction vessel was maintained at 250 L/hr. The stirring speed was reduced in steps according to the particle size D50 of the material. When D50 reaches 8 µm, the stirring speed was reduced to and maintained at 200rpm. When D50 reached 13.5-13.6 µm, the reaction was stopped to obtain a porous, puff-shaped large-particle ternary precursor slurry with an average particle size of 10-20 µm.

In step 5, the ternary precursor slurry that meets the particle size requirements was discharged into the transfer tank and stirred.

In step 6, alkaline washing and pure water washing were performed on the ternary precursor slurry alternately.

In step 7, the ternary precursor slurry was evenly distributed in a drying device for drying. The drying temperature was 120°C, the drying time was 12 hrs, and the mesh of screens was 325 in double layers.

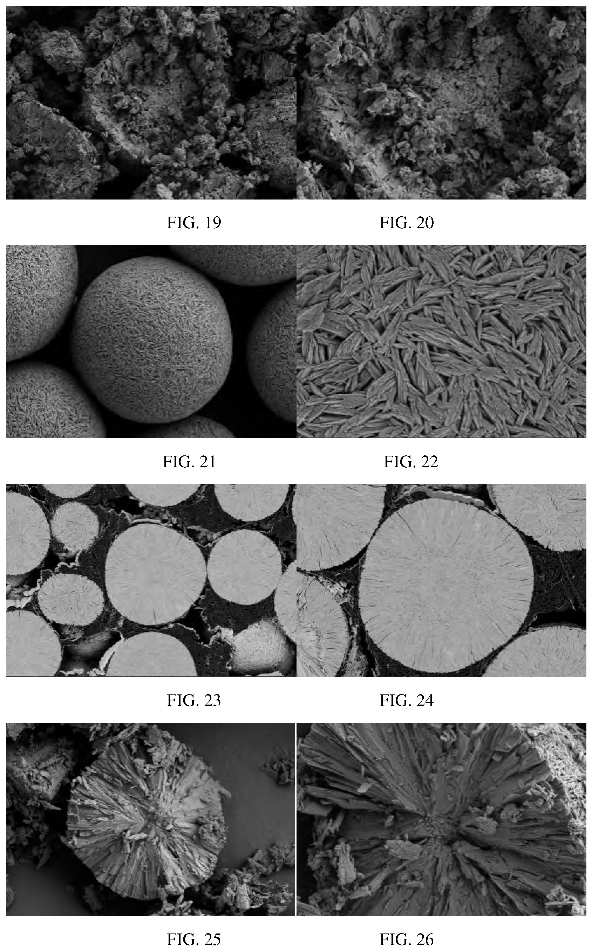

Through the above steps, a large-particle cathode material precursor with a dense surface morphology as shown in FIGS. 21-26 can be obtained.

### Comparative Example 2

This comparative example provides a method for preparing a cathode material precursor, including the following steps: step 1, step 2, step 3, step 4, step 5, step 6 and step 7.

In step 1, selected A Ni soluble sulfate, a Co soluble sulfate, and a Mn soluble sulfate according to a molar ratio of 88:4:8, and mixed them with deionized water to prepare mixed metal sulfate solution with a concentration of 2.3 mol/L.

NaOH solution was prepared with a concentration of 10.5 mol/L.

NH₃·H₂O solution was prepared with a concentration of 6 mol/L.

The NaOH solution, the NH₃·H₂O solution, and the mixed metal sulfate solution are maintained at a constant temperature of 25°C.

In step 2, a jacket of a 180 L reaction vessel was opened to allow water to enter and return the reaction vessel.

In step 3, 100 L hot pure water was added to a reaction vessel with a volume of 200 L, a temperature of the reaction vessel was controlled to 60°C and a speed of stirring was controlled at 500 rpm, then the NaOH solution and the NH₃·H₂O solution were pumped into the reaction vessel, the concentration of NH₃·H₂O solution was maintained at 6.0 g/L before adding alkali, an initial pH was 11.60 at 45°C, and a reaction substrate solution of the reaction vessel was prepared.

In step 4, after the reaction starts, the flow rates of the NaOH solution, the NH₃·H₂O solution, and the mixed metal sulfate solution were set to 0 mL/min, 20 mL/min, and 133 mL/min respectively, and were continuously pumped into a 60°C constant-temperature reaction vessel through a feeding tank for reaction respectively. At a stirring speed of 500 rpm, the pH value was quickly adjusted to 10.8, the flow rate of the NaOH solution was adjusted to stabilize the pH value of the synthesis system at 10.8, the flow rate of the NH₃·H₂O solution was adjusted to maintain the NH₃·H₂O concentration of the synthesis system at 6.0 g/L, flow rate of N₂ under liquid was adjusted to 400 L/hr in atmosphere in the reaction vessel.

After starting the reaction for 1h, the flow rate of the mixed metal sulfate solution was adjusted and slowly increased to 417mL/min in 6h. The flow rates of the NaOH solution and the NH₃·H₂O solution were simultaneously adjusted to stabilize the pH value at 10.8 and the ammonia value at 6.0. The flow rate of N₂ under liquid in the atmosphere in the reaction vessel was maintained at 400 L/hr. The stirring speed was reduced in steps according to the particle size D50 of the material. When D50 reaches 8 µm, the stirring speed was reduced to and maintained at 200rpm. When D50 reached 13.5-13.6 µm, the reaction was stopped to obtain a porous, puff-shaped large-particle ternary precursor slurry with an average particle size of 10-20 µm.

In step 5, the ternary precursor slurry that meets the particle size requirements was discharged into the transfer tank and stirred.

In step 6, alkaline washing and pure water washing were performed on the ternary precursor slurry alternately.

In step 7, the ternary precursor slurry was evenly distributed in a drying device for drying. The drying temperature was 120°C, the drying time was 12 hrs, and the mesh of screens was 325 in double layers.

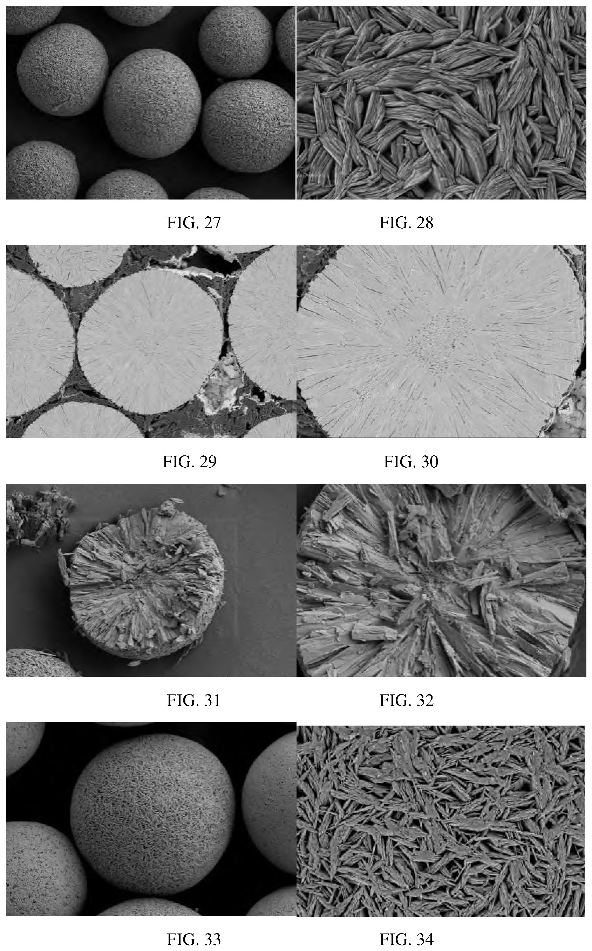

The above steps can obtain a large-particle cathode material precursor with a dense surface morphology as shown in FIGS. 27-32.

### Comparative Example 3

This comparative example provides a method for preparing a cathode material precursor, including the following steps: step 1, step 2, step 3, step 4, step 5, step 6 and step 7.

In step 1, selected A Ni soluble sulfate, a Co soluble sulfate, and a Mn soluble sulfate in a molar ratio of 96:2:2, and mixed them with deionized water to prepare a mixed metal sulfate solution with a concentration of 2.3 mol/L.

NaOH solution was prepared with a concentration of 10.5 mol/L.

NH₃·H₂O solution was prepared with a concentration of 6 mol/L.

The NaOH solution, the NH₃·H₂O solution, and the mixed metal sulfate solution are maintained at a constant temperature of 25°C.

In step 2, a jacket of a 180 L reaction vessel was opened to allow water to enter and return the reaction vessel.

In step 3, 100 L hot pure water was added to a reaction vessel with a volume of 200 L, a temperature of the reaction vessel was controlled to 60°C and a speed of stirring was controlled at 500 rpm, then the NaOH solution and the NH₃·H₂O solution were pumped into the reaction vessel, the concentration of NH₃·H₂O solution was maintained at 6.0 g/L before adding alkali, an initial pH was 11.60 at 45°C, and a reaction substrate solution of the reaction vessel was prepared.

In step 4, after the reaction started, the flow rates of the NaOH solution, the NH₃·H₂O solution, and the mixed metal sulfate solution were set to 0mL/min, 20mL/min, and 133mL/min respectively, and were continuously pumped into a 60°C constant-temperature reaction vessel through a feeding tank for reaction respectively. At a stirring speed of 500 rpm, the pH value was quickly adjusted to 11.3, the flow rate of the NaOH solution was adjusted to stabilize the pH value of the synthesis system at 11.3, the flow rate of the NH₃·H₂O solution was adjusted to maintain the NH₃·H₂O concentration of the synthesis system at 9.0 g/L, flow rate of N₂ under liquid was adjusted to 700 L/hr in atmosphere in the reaction vessel.

After starting the reaction for 1h, the flow rate of the mixed metal sulfate solution was adjusted and slowly increased to 417mL/min in 6h. The flow rates of the NaOH solution and the NH₃·H₂O solution were simultaneously adjusted to stabilize the pH value at 11.3 and the ammonia value at 9.0. The flow rate of N₂ under liquid in the atmosphere in the reaction vessel was maintained at 700 L/hr. The stirring speed was reduced in steps according to the particle size D50 of the material. When D50 reaches 8 µm, the stirring speed was reduced to and maintained at 200rpm. When D50 reached 13.5-13.6 µm, the reaction was stopped to obtain a porous, puff-shaped large-particle ternary precursor slurry with an average particle size of 10-20 µm.

In step 5, the ternary precursor slurry that meets the particle size requirements was discharged into the transfer tank and stirred.

In step 6, alkaline washing and pure water washing were performed on the ternary precursor slurry alternately.

In step 7, the ternary precursor slurry was evenly distributed in a drying device for drying. The drying temperature was 120°C, the drying time was 12 hrs, and the mesh of screens was 325 in double layers.

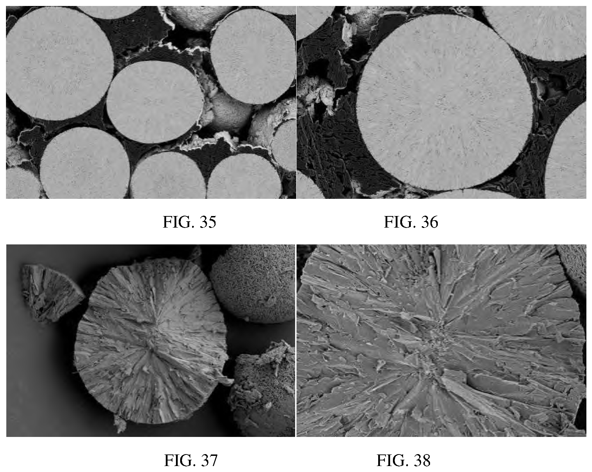

Through the above steps, a large-particle cathode material precursor with a dense surface morphology as shown in FIGS. 33-38 can be obtained.

The cathode material precursors prepared in Examples 1-3 of the present application and Comparative Examples 1-3 are respectively subjected to Ni content, Co content, Mn content, sodium (Na) content, sulfur (S) content, specific surface area test (BET) and thermal desorption test (TD), and the results are shown in Table 1 below.

**Table 1**

| | Ni (mol%) | Co (mol%) | Mn (mol%) | Na (ppm) | S (ppm) | BET (m²/g) | TD(g/cm³) |
|---|---|---|---|---|---|---|---|
| Example 1 | 88.06 | 5.97 | 5.99 | 76 | 1134 | 30.15 | 1.34 |
| Example 2 | 88.03 | 4.02 | 7.95 | 72 | 1028 | 29.83 | 1.37 |
| Example 3 | 95.95 | 2.03 | 2.02 | 63 | 1141 | 28.97 | 1.36 |
| Comparative Example 1 | 88.03 | 6.01 | 5.96 | 204 | 2047 | 13.65 | 1.87 |
| Comparative Example 2 | 87.99 | 4.03 | 7.92 | 215 | 2080 | 14.60 | 1.84 |
| Comparative Example 3 | 95.97 | 1.99 | 2.04 | 223 | 2054 | 12.85 | 1.91 |

It can be seen from Table 1 that the main content results of Example 1 and Comparative Example 1 are similar, the main content results of Example 2 and Comparative Example 2 are similar, and the main content results of Example 3 and Comparative Example 3 are similar. Examples 1-3 have larger specific surface area, lower sodium content, lower sulfur content, and smaller thermal desorption than Comparative Examples 1-3, respectively.

From the electron microscope images of FIGS. 3-38, it can be seen that under oxidizing conditions, the surface whiskers of the particles in Examples 1-3 are thinner and looser. During the washing process, impurities such as sodium and sulfur are easier to be removed. Moreover, due to the loose surface whiskers of the particles in Examples 1-3, the strength of the precursor is reduced, the particles are more easily broken, the difficulty of cathode sintering is reduced, and the sintering is more complete.

It should be noted that the dark color in FIG. 5 indicates that the particle density is high, and the lithium ions move into the large particles and are relatively evenly distributed.

Here we only introduce the content related to the invention point, and the rest can be obtained by referring to the relevant technology, and will not be explained in detail here.

The above are only optional examples of the present application and are not intended to limit the present application. For those skilled in the art, the present application may have various changes and variations. Any modification, equivalent replacement, improvement, etc. made within the spirit and principle of the present application should be included in the scope of the claims of the present application.

## Claims

1. A cathode material precursor, **characterized in that** the cathode material precursor comprises a precursor particle, wherein the precursor particle is formed by agglomerating a plurality of first particles, wherein each of the first particles has core-shell structure, and the core-shell structure has a core and a surface layer;
the core has dense seed crystals; and
the surface layer has a plurality of whiskers, wherein pores are provided between adjacent whiskers.

2. The cathode material precursor according to claim 1, **characterized in that** a ratio of a particle size of the seed crystal to a particle size of the first particle ranges from 30% to 40%.

3. The cathode material precursor according to claim 1, **characterized in that** a ratio of a particle size of the first particles to a particle size of the precursor particle ranges from 20% to 50%.

4. The cathode material precursor according to claim 1, **characterized in that** the whisker has a thickness ranging from 10 nm to 30 nm.

5. The cathode material precursor according to claim 1, **characterized in that** a specific surface area of the precursor particle ranges from 20 m²/g to 40 m²/g.

6. The cathode material precursor according to any one of claims 2 to 5, **characterized in that** the precursor particle further comprises a shell layer, and the shell layer covers a surface layer of the core-shell structure.

7. The cathode material precursor according to claim 6, **characterized in that** the shell layer has a thickness ranging from 0.2 µm to 0.5 µm.

8. The cathode material precursor according to any one of claims 2 to 5, **characterized in that** the core of the core-shell structure has a thickness ranging from 4 µm to 8 µm.

9. A preparation method for cathode material precursor, **characterized in that** the cathode material precursor is prepared by the following steps:
mixing a variety of metal ion sources with water to obtain a mixed metal ion solution; and preparing a first alkali solution and a complexing agent respectively;
after adding water and introducing protective gas to a reactor, adding the first alkali solution and the complexing agent to form a reaction substrate solution;
adding the first alkali solution, the complexing agent, and the mixed metal ion solution to the reactor in parallel to perform a nucleation reaction, and controlling a reaction atmosphere to be a first atmosphere, so as to form a seed crystal; when it is detected that the seed crystal content reaches a target requirement, reducing a degree of acidity or alkalinity of the reaction solution and controlling the reaction atmosphere to be a second atmosphere, so as to maintain growth reaction of seed crystal particles;
continuously feeding, filtering when it is detected that a liquid level in the reactor reaches a filtering requirement, maintaining a liquid level stable in the reactor, and when it is detected that a particle size of material in the reactor reaches a target requirement, stopping feeding and discharge the material into a container; and
performing solid-liquid separation on material in the container, and processing a separated filter cake to obtain the cathode material precursor.

10. The preparation method the cathode material precursor according to claim 9, **characterized in that** the first atmosphere comprises at least the protective gas, and the second atmosphere comprises air and the protective gas.

11. The preparation method for the cathode material precursor according to claim 9, **characterized in that** in the second atmosphere, air flow rate gradually increases with increase of solid content of material.

12. The preparation method for the cathode material precursor according to claim 10, **characterized in that** air flow rate of the first atmosphere ranges from 0 L/hr to 800 L/hr, and air flow rate of protective gas of the first atmosphere ranges from 100 L/hr to 800 L/hr.

13. The preparation method for the cathode material precursor according to claim 10, **characterized in that** air flow rate of the second atmosphere ranges from 300 L/hr to 800 L/hr, and air flow rate of protective gas of the second atmosphere ranges from 0 L/hr to 300 L/hr.

14. The preparation method for the cathode material precursor according to claim 12 or 13, **characterized in that** concentration of a complexing agent in the nucleation reaction ranges from 2.0 g/L to 10.0 g/L.

15. The preparation method for the cathode material precursor according to claim 12 or 13, **characterized in that** concentration of a complexing agent in the growth reaction ranges from 1.0 g/L to 10.0 g/L.

16. The preparation method for the cathode material precursor according to claim 12 or 13, **characterized in that** flow rate of the mixed metal ion solution ranges from 0.5 L/hr to 40 L/hr.

17. The preparation method for the cathode material precursor according to claim 12 or 13, **characterized in that** flow ratio of the first alkali solution, the complexing agent, and the mixed metal ion solution is in a range of 0-9: 3-20: 20-133.

18. The preparation method for the cathode material precursor according to claim 12 or 13, **characterized in that** the reaction solution has a degree of acidity or alkalinity ranging from 10.0 to 11.5.

19. A cathode material, **characterized in that** the cathode material comprises the cathode material precursor according to any one of claims 1 to 8, or a cathode material precursor prepared by the method according to any one of claims 9 to 18.

20. A secondary battery, **characterized in that** the secondary battery comprises a cathode plate, an anode plate, a separator, and an electrolyte; wherein the cathode plate contains the cathode material as claimed in claim 19.

## Amended claims

### Amended claims under Art. 19.1 PCT

1. A cathode material precursor, **characterized in that** the cathode material precursor comprises a precursor particle, wherein the precursor particle is formed by agglomerating a plurality of first particles, wherein each of the first particles has core-shell structure, and the core-shell structure has a core and a surface layer;
the core has dense seed crystals; and
the surface layer has a plurality of whiskers, wherein pores are provided between adjacent whiskers.

2. The cathode material precursor according to claim 1, wherein a ratio of a particle size of the seed crystal to a particle size of the first particle ranges from 30% to 40%.

3. The cathode material precursor according to claim 1, wherein a ratio of a particle size of the first particles to a particle size of the precursor particle ranges from 20% to 50%.

4. The cathode material precursor according to claim 1, wherein the whisker has a thickness ranging from 10 nm to 30 nm.

5. The cathode material precursor according to claim 1, wherein a specific surface area of the precursor particle ranges from 20 m²/g to 40 m²/g.

6. The cathode material precursor according to any one of claims 2 to 5, wherein the precursor particle further comprises a shell layer, and the shell layer covers a surface layer of the core-shell structure.

7. The cathode material precursor according to claim 6, wherein the shell layer has a thickness ranging from 0.2 µm to 0.5 µm.

8. The cathode material precursor according to any one of claims 2 to 5, wherein the core of the core-shell structure has a thickness ranging from 4 µm to 8 µm.

9. A preparation method for cathode material precursor, **characterized in that** the cathode material precursor is prepared by the following steps:
mixing a variety of metal ion sources with water to obtain a mixed metal ion solution; and preparing a first alkali solution and a complexing agent respectively;
after adding water and introducing protective gas to a reactor, adding the first alkali solution and the complexing agent to form a reaction substrate solution;
adding the first alkali solution, the complexing agent, and the mixed metal ion solution to the reactor in parallel to perform a nucleation reaction, and controlling a reaction atmosphere to be a first atmosphere, so as to form a seed crystal; when it is detected that the seed crystal content reaches a target requirement, reducing a degree of acidity or alkalinity of the reaction solution and controlling the reaction atmosphere to be a second atmosphere, so as to maintain growth reaction of seed crystal particles;
continuously feeding, filtering when it is detected that a liquid level in the reactor reaches a filtering requirement, maintaining a liquid level stable in the reactor, and when it is detected that a particle size of material in the reactor reaches a target requirement, stopping feeding and discharge the material into a container; and
performing solid-liquid separation on material in the container, and processing a separated filter cake to obtain the cathode material precursor.

10. The preparation method the cathode material precursor according to claim 9, wherein the first atmosphere comprises at least the protective gas, and the second atmosphere comprises air and the protective gas.

11. The preparation method for the cathode material precursor according to claim 9, wherein in the second atmosphere, air flow rate gradually increases with increase of solid content of material.

12. The preparation method for the cathode material precursor according to claim 10, wherein air flow rate of the first atmosphere ranges from 0 L/hr to 800 L/hr, and air flow rate of protective gas of the first atmosphere ranges from 100 L/hr to 800 L/hr; and/or
wherein air flow rate of the second atmosphere ranges from 300 L/hr to 800 L/hr, and air flow rate of protective gas of the second atmosphere ranges from 0 L/hr to 300 L/hr.

13. The preparation method for the cathode material precursor according to claim 12, wherein concentration of a complexing agent in the nucleation reaction ranges from 2.0 g/L to 10.0 g/L; and/or
wherein concentration of a complexing agent in the growth reaction ranges from 1.0 g/L to 10.0 g/L; and/or
wherein flow rate of the mixed metal ion solution ranges from 0.5 L/hr to 40 L/hr; and/or
wherein flow ratio of the first alkali solution, the complexing agent, and the mixed metal ion solution is in a range of 0-9: 3-20: 20-133; and/or
wherein the reaction solution has a degree of acidity or alkalinity ranging from 10.0 to 11.5.

14. A cathode material, **characterized in that** the cathode material comprises the cathode material precursor according to any one of claims 1 to 8.

15. A secondary battery, **characterized in that** the secondary battery comprises a cathode plate, an anode plate, a separator, and an electrolyte; wherein the cathode plate contains the cathode material as claimed in claim 14.
